# DEMANDE DE BREVET EUROPEEN

(11) **EP 4 223 581 A1**
(43) Date de publication de la demande: **09.08.2023**
(21) Numéro de dépôt: 23155258.9
(22) Date de dépôt: 07.02.2023
(51) Int. Cl.: B60L 53/14, B60L 53/18, B60L 53/30, H02G 3/32, B60L 53/31, B60L 55/00, H02G 15/007, H02J 7/00, H01R 13/639, H01R 13/58

(54) **BORNE DE CHARGE POUR VÉHICULE HYBRIDE OU ÉLECTRIQUE**

(30) Priorité: 08.02.2022 FR 2201110
(71) Demandeur: Valeo Systèmes de Contrôle Moteur, 95892 Cergy - Pontoise (FR)
(72) Inventeur: TANSORIER, Maxime, 75015 PARIS (FR); TORDEUX, Samuel, 75015 PARIS (FR); FRAISE, Sébastien, 75015 PARIS (FR)
(74) Mandataire: Valeo Powertrain Systems

(57) **Abrégé**

Borne de charge (1) pour véhicule électrique ou hybride, comprenant :
- une paroi (20),
- un câble électrique (22), et
au moins un collier de serrage (12) fixé sur la paroi (20),
caractérisé par le fait que le collier de serrage (12) a une forme permettant l'existence, dans un plan perpendiculaire à la direction d'extension du câble (22), d'au moins trois points de contact du câble (M1, M2, M3) avec l'ensemble formé par le collier de serrage (12) et la paroi (20), de manière à serrer le câble (22) sur la paroi (20).

## Description

La présente invention concerne une borne de charge pour véhicule hybride ou électrique.

Le véhicule possède par exemple une batterie destinée à alimenter une machine électrique de propulsion du véhicule, cette batterie présentant une tension nominale dont la valeur peut être de 48V, ou supérieure à 60V, étant par exemple supérieure à 200V ou à 300V, ou à 400V, ou à 800V.

La borne reçoit l'énergie électrique d'un réseau électrique via un câble qui peut être, selon l'application, un câble monophasé ou un câble triphasé, d'où il s'ensuit une différence de diamètre entre câbles. Par ailleurs, même d'un câble monophasé à l'autre, le diamètre du câble peut changer en fonction de la puissance véhiculée. Il en est de même d'un câble triphasé à l'autre qui peuvent avoir un diamètre différent en fonction de la puissance véhiculée.

Il est nécessaire de fixer de manière robuste le câble à l'intérieur de la borne, pour des raisons de sécurité et de bon fonctionnement de la borne. Cette fixation robuste requiert, compte-tenu des différences de diamètre précitées, plusieurs types de colliers de serrage, ce qui est coûteux et empêche d'accroître la standardisation de la borne de charge.

Il existe un besoin pour remédier aux inconvénients précités.

L'invention y parvient, selon l'un de ses aspects, à l'aide d'une borne de charge pour véhicule électrique ou hybride, comprenant :
- une paroi,
- un câble électrique, et
au moins un collier de serrage fixé sur la paroi,
caractérisé par le fait que le collier de serrage a une forme permettant l'existence, dans un plan perpendiculaire à la direction d'extension du câble, d'au moins trois points de contact du câble avec l'ensemble formé par le collier de serrage et la paroi, de manière à serrer le câble sur la paroi.

Selon l'invention, la forme du collier de serrage permet l'existence d'au moins trois points de contact du câble avec l'ensemble formé par le collier de serrage et la paroi. L'existence de ces trois points de contact, assurant une fixation robuste, est ainsi garantie pour différents diamètres de câble, par exemple pour tout câble de diamètre compris entre 5 mm et 30 mm, notamment entre 10 mm et 22 mm, notamment entre 10 et 19 mm. Un même collier de serrage peut ainsi être utilisé pour une pluralité de diamètres de câbles, ce qui accroît le caractère standard de la borne.

La paroi peut présenter une surface de contact avec le câble qui est incurvée, et le contour du câble peut être, dans ledit plan perpendiculaire à sa direction d'extension, un cercle. Cette paroi, contre laquelle le câble est serré par le collier de serrage peut définir un desdits points de contact du câble avec l'ensemble formé par la paroi et le collier de serrage, voire plusieurs points de contact avec le câble. Cette paroi est par exemple réalisée d'une seule pièce avec une partie du boîtier de la borne, par exemple avec le cadre arrière de la borne, qui est la partie de ce boîtier la plus éloignée de l'utilisateur lorsqu'il souhaite se brancher à la borne. En variante, cette paroi est distincte du boîtier et rapportée sur celui-ci.

Le collier de serrage peut avoir une portion ayant, dans ledit plan perpendiculaire à la direction d'extension du câble, une forme de ligne brisée, cette portion en forme de ligne brisée ménageant au moins un point de contact, notamment au moins deux points de contact, du câble avec l'ensemble formé par le collier de serrage et la paroi. Dans ce cas, au moins un autre, voire deux autres, desdits points de contact est ménagé par la paroi.

La portion en forme de ligne brisée peut comprendre au moins trois sommets, à savoir successivement un premier sommet, un deuxième sommet et un troisième sommet, le deuxième sommet constituant un point de rebroussement pour la portion en forme de ligne brisée. Autrement dit, dans le plan perpendiculaire à la direction d'extension du câble, la portion en forme de ligne brisée peut présenter une forme en M ou en W selon le sens dans lequel on observe cette portion. La portion en forme de ligne brisée comprend notamment exactement trois sommets.

Cette configuration du collier de serrage permet d'obtenir de façon simple l'existence des trois points de contact ou plus mentionnés précédemment.

Dans un tel cas, le collier de serrage peut être positionné sur la paroi de manière à ce que le premier sommet et le troisième sommet soient à une distance du câble supérieure à celle existant entre le deuxième sommet et le câble. Deux des points de contact du câble avec l'ensemble formé par le collier de serrage et la paroi peuvent être définis par des tronçons de la ligne brisée autres que celui reliant le deuxième sommet au premier sommet et que celui reliant le deuxième sommet au troisième sommet. En variante, le deuxième sommet peut définir l'un de ces points de contact. Un ou plusieurs autres points de contact existent alors au niveau de la paroi.

En variante, mais toujours lorsque la portion en forme de ligne brisée existe, le collier de serrage peut être positionné sur la paroi de manière à ce que le premier sommet et le troisième sommet soient à une distance du câble inférieure à celle existant entre le deuxième sommet et le câble. Chacun du premier et du troisième sommet peut alors définir un point de contact du câble avec l'ensemble formé par le collier de serrage et la paroi, un ou plusieurs autres points de contact existant alors au niveau de la paroi. Selon cette variante, et de manière alternative, le collier de serrage définit encore deux points de contact avec le câble, via respectivement le tronçon reliant le deuxième sommet au premier sommet et le tronçon reliant le deuxième sommet au troisième sommet.

Dans tout ce qui précède, le collier de serrage peut être fixé sur la paroi via au moins deux organes de fixation, chaque organe de fixation coopérant avec une zone de fixation du collier de serrage et, dans ledit plan perpendiculaire à la direction d'extension du câble, la portion en forme de ligne brisée peut être disposée entre les deux zones de fixation. Chaque organe de fixation est par exemple une vis.

Comme déjà mentionné, le câble électrique peut être un câble triphasé ou monophasé. L'invention permet indifféremment d'utiliser le même collier de serrage pour fixer un câble triphasé ou monophasé sur la paroi de la borne. Le câble électrique est de préférence relié à un réseau électrique, étant par exemple un réseau électrique régional ou national. En variante, il peut s'agir d'un réseau local indépendant, comprenant par exemple une ou plusieurs batteries alimentées par des sources d'énergie telles que éoliennes, des panneaux solaires, des piles à combustible ou des générateurs d'hydroélectricité.

Dans tout ce qui précède, la borne de charge peut comprendre un boîtier à l'intérieur duquel est disposée la paroi, cette paroi étant notamment réalisée d'une seule pièce avec le boîtier.

Dans tout ce qui précède, le collier de serrage peut être réalisé en plastique, notamment en polypropylène chargé de fibres, notamment de fibres de verre. Le matériau du collier de serrage peut présenter un module d'Young de traction de 8700 MPa.

Dans tout ce qui précède, le collier de serrage peut être réalisé d'une seule pièce. Dans ce cas, les zones de fixation et la portion en forme de ligne brisée appartiennent à une seule et même pièce.

Dans tout ce qui précède, la borne de charge peut être configurée pour fournir au véhicule une puissance électrique comprise entre 7 kW et 22 kW, voire plus. Le transfert d'énergie électrique entre la borne de charge et le véhicule peut être réversible, le véhicule pouvant le cas échéant fournir de l'énergie électrique à la borne et donc au réseau électrique qui y est connecté.

Dans tout ce qui précède, la borne de charge peut être configuré pour échanger de l'énergie électrique avec plus d'un véhicule simultanément, par exemple avec deux véhicules. La borne présente alors deux connecteurs distincts, chacun de ces connecteurs permettant l'échange d'énergie électrique avec un véhicule respectif.

La borne peut être configurée pour communiquer avec un réseau de données non filaire.

L'invention a encore pour objet, selon un autre de ses aspects, un procédé de serrage d'un câble électrique sur une paroi d'une borne de charge pour véhicule électrique ou hybride, dans lequel :
- on dispose d'un collier de serrage ayant une forme permettant l'existence, dans un plan perpendiculaire à la direction du câble, d'au moins trois points de contact du câble avec l'ensemble formé par le collier de serrage et la paroi, et
- on fixe le collier de serrage sur la paroi après l'avoir positionné de telle sorte que lesdits trois points de contact avec le câble existent, de manière à serrer le câble sur la paroi.

Tout ou partie de ce qui a été exposé ci-dessus s'applique encore à cet autre aspect.

Plus précisément, selon ce procédé:
- le collier de serrage peut interagir avec le câble via une portion ayant, dans ledit plan perpendiculaire à la direction d'extension du câble, une forme de ligne brisée, cette portion en forme de ligne brisée comprenant au moins trois sommets, à savoir successivement un premier sommet, un deuxième sommet et un troisième sommet, le deuxième sommet constituant un point de rebroussement pour la portion en forme de ligne brisée, et
- on peut positionner la portion en forme de ligne brisée de sorte que le premier sommet et le troisième sommet soient à une distance du câble supérieure à celle existant entre le deuxième sommet et le câble, ou de sorte que le premier sommet et le troisième sommet soient à une distance du câble inférieure à celle existant entre le deuxième sommet et le câble.

Ce procédé peut permettre, avec un même collier de serrage, de serrer sur la paroi une pluralité de diamètres de câble, par exemple tout câble monophasé ou triphasé dont le diamètre est compris entre 5 mm et 30 mm, notamment entre 10 mm et 22 mm, notamment entre 10 et 19 mm.

L'invention pourra être mieux comprise à la lecture de la description qui va suivre d'un exemple non limitatif de mise en oeuvre de celle-ci et à l'examen du dessin annexé sur lequel :
[Fig.1] représente en éclaté une borne de charge selon un exemple de mise en oeuvre de l'invention, et
[Fig.2], [Fig.3] et [Fig.4] représentent le serrage sur la paroi du boîtier de câbles de diamètres différents.

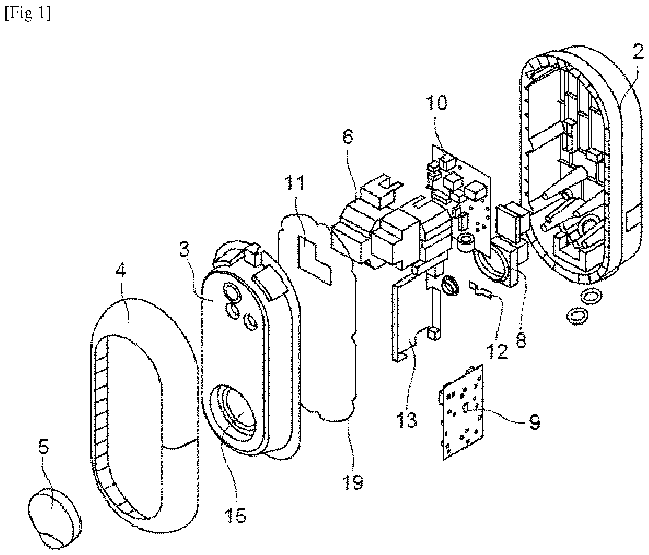

On a représenté sur la figure 1 une borne de charge 1 selon un exemple de mise en oeuvre de l'invention. Cette borne 1 est destinée à permettre un échange d'énergie électrique entre un véhicule et un réseau électrique auquel elle est connectée via un câble 22 non représenté sur cette figure 1. Le véhicule peut être un véhicule hybride ou un véhicule électrique.

Le réseau électrique est par exemple un réseau national véhiculant une tension alternative de valeur efficace 230V et de fréquence 50Hz. Cette tension peut être triphasée.

La borne 1 comprend dans l'exemple considéré un boîtier formé par la réunion d'un cadre arrière 2 et d'un cadre avant 3 qui sont assemblés ensemble. Un couvercle 4 est monté sur la périphérie du cadre avant 3, formant en partie la face avant de la borne 1, c'est-à-dire sa face tournée vers le véhicule. Un joint 19 est interposé entre le cadre avant 3 et le cadre arrière 2 pour assurer l'étanchéité à l'intérieur du boîtier de la borne.

La borne 1 comprend encore un clapet 5, obturant de façon sélective une ouverture 15 ménagée dans le cadre avant 3. Cette ouverture 15 permet l'introduction dans la borne 1 d'un connecteur externe monté sur un câble de raccordement au circuit électrique du véhicule.

La borne 1 comprend encore un connecteur 8 pouvant être de type femelle tel qu'une embase ou de type mâle tel qu'une fiche. Ce connecteur 8 peut être triphasé, auquel cas il comprend quatre contacts électriques, ou être monophasé, auquel cas il en comprend deux.

La borne 1 comprend également un support 13 portant :
- un contacteur 7, apte à interrompre sélectivement l'échange d'énergie électrique avec le véhicule, et
- un compteur 6 pour mesurer la quantité d'énergie électrique échangée entre la borne 1 et le véhicule. Ce compteur 6 est par exemple réalisé pour satisfaire les exigences de la Directive MID (Directive 2014/32/UE).

Le support 13 peut être réalisé en matière plastique, le cas échéant renforcé en fibres. Le support est par exemple réalisé en polypropylène renforcé en fibres de verre.

La borne comprend encore dans l'exemple considéré plusieurs cartes électroniques.

L'une de ces cartes est une carte électronique de puissance 10 portant des composants électroniques tels que des inductances ou des condensateurs pour assurer notamment une fonction de filtrage. D'autres fonctions peuvent être réalisées par cette carte 10, par exemple des fonctions complémentaires telle que la conversion de tension pour l'alimentation de composants basse tension ou encore une fonction de fusible.

Une autre carte électronique est une carte électronique de commande 9, cette carte assurant la commande de la carte électronique de puissance 10. Elle peut également gérer la connexion éventuelle de la borne 1 avec un réseau de données sans fil et/ou la connexion avec le véhicule. Cette carte peut également piloter une carte électronique 11 d'interface homme/machine.

La carte électronique 11 d'interface homme/machine porte par exemple un voyant lumineux tel qu'une LED informant l'utilisateur de la disponibilité ou de l'état de fonctionnement de la borne 1, ainsi éventuellement qu'une fonction RFID ou un bouton pouvant être actionné par l'utilisateur.

Les cartes électroniques 9 et 10 sont par exemple vissées sur le support 13, tandis que la carte électronique 11 est directement montée sur le cadre avant 3 de la borne.

La borne 1 comprend encore un collier de serrage 12 permettant de maintenir en place sur le cadre arrière 3 le câble 22 non représenté sur la figure 1, qui est relié au réseau électrique.

Selon l'invention, un même collier de serrage 12 peut indifféremment permettre de serrer sur une paroi 20 du cadre arrière 3 le câble 22, pour une pluralité de diamètres. Par exemple tout type de câble, qu'il soit monophasé ou triphasé, dont le diamètre est compris entre 10 mm et 22 mm, notamment entre 10 mm et 19 mm, peut être serré sur la paroi 20 à l'aide du même collier de serrage 12.

Le collier de serrage 12 est dans les exemples considérés réalisé en plastique, notamment en polypropylène chargé de fibres. Il s'agit par exemple de PPCompound H1030 commercialisé par Sabic^{®}.

La paroi 20 présente ici une forme incurvée, pour coopérer avec le contour circulaire du câble 22. La paroi 20 est dans l'exemple considéré réalisée de manière monobloc avec le cadre arrière 3.

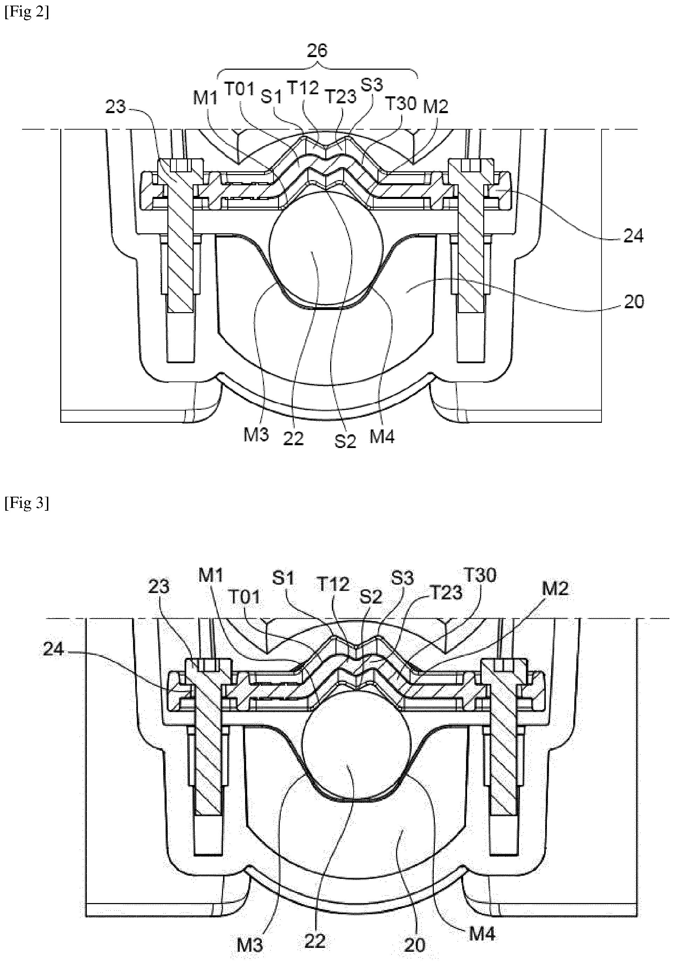

Comme on peut le voir sur les figures 2 à 4, le collier de serrage 12 est fixé sur la paroi 20 via au moins deux organes de fixation 23 qui sont ici des vis.

Chaque organe de fixation 23 coopère avec une zone de fixation 24 du collier de serrage. Dans un plan perpendiculaire à la direction d'extension du câble 22, qui est le plan des figures 2 à 4, on constate que ces deux zones de fixation 24 encadrent une portion du collier de serrage en forme de ligne brisée 26.

Cette portion en forme de ligne brisée comprend ici trois sommets S1, S2 et S3 et quatre tronçons, respectivement appelés T01, T12, T23 et T30 comme on peut le voir sur les figures 2 à 4. On constate que le deuxième sommet S2 constitue un point de rebroussement pour la portion en forme de ligne brisée 26. Autrement dit, selon comment on la regarde, cette portion en forme de ligne brisée 26 présente dans le plan des figures 2 à 4 une forme de M ou de W.

Selon le diamètre du câble 22, le collier de serrage 12 est positionné différemment, dans le but d'assurer qu'indépendamment du diamètre du câble 22, au moins trois points de contact existent entre le câble 22 et l'ensemble formé par le collier de serrage 12 et la paroi 20, de manière à assurer un serrage robuste du câble 22 sur la paroi 20.

Dans l'exemple de la figure 2, le câble électrique 22 est un câble triphasé et le collier de serrage 12 est disposé de manière à ce que le premier sommet S1 et le troisième sommet S3 soient à une distance du câble 22 supérieure à celle existant entre le deuxième sommet S2 et le câble 22. Deux points de contact M1 et M2 du câble 22 avec l'ensemble formé par le collier de serrage 12 et la paroi 20 sont ici définis respectivement par le tronçon T01 et par le tronçon T30. Deux autres points de contact M3 et M4 sont dans cet exemple également définis par la paroi 20.

Dans l'exemple de la figure 3, le câble électrique 22 présente un diamètre inférieur à celui de la figure 2. Il s'agit par exemple d'un câble monophasé ou d'un câble triphasé véhiculant une puissance électrique moindre que celle de l'exemple de la figure 2. L'orientation de la portion en forme de ligne brisée 26 est similaire à celle de la figure 2, le sommet S2 étant toujours plus proche du câble 22 que ne le sont les sommets S1 et S3. Dans cet exemple deux points de contact M1 et M2 similaires à ceux de la figure 2 sont définis par le collier de serrage 12. Deux autres points de contact M3 et M4 sont dans cet exemple également définis par la paroi 20.

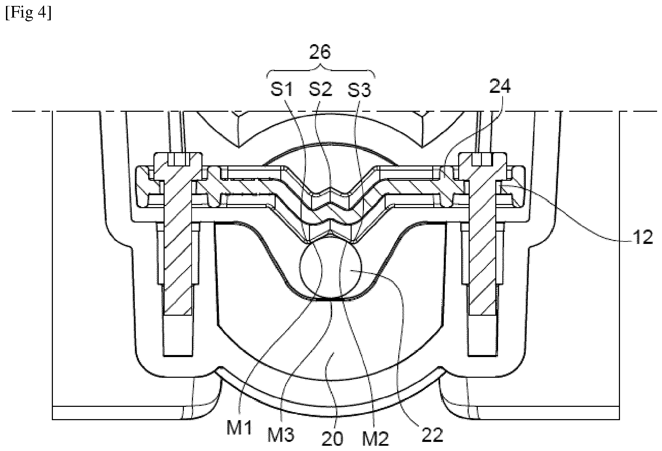

Dans l'exemple de la figure 4, le câble électrique 22 présente encore un diamètre inférieur à celui de la figure 3. Il s'agit ici d'un câble monophasé. L'orientation de la portion en forme de ligne brisée 26 est opposée à celle des figures 2 et 3. On constate sur la figure 4 que le sommet S2 est cette fois plus éloigné du câble 22 que ne le sont les sommets S1 et S3. Deux points de contact M1 et M2 du câble 22 avec l'ensemble formé par le collier de serrage 12 et la paroi 20 sont ici définis respectivement par le tronçon T12 et par le tronçon T23. Un troisième point de contact M3 est dans cet exemple défini par la paroi 20.

On constate ainsi que, dans tous les exemples décrits ci-dessus, on obtient au moins trois points de contact entre le câble 22 et l'ensemble formé par le collier de serrage 12 et la paroi 20, quatre points de contact pouvant même être obtenus. On assure ainsi un serrage robuste du câble 22 sur la paroi.

## Revendications

1. Borne de charge (1) pour véhicule électrique ou hybride, comprenant :
- une paroi (20),
- un câble électrique (22), et
au moins un collier de serrage (12) fixé sur la paroi (20),
**caractérisé par le fait que** le collier de serrage (12) a une forme permettant l'existence, dans un plan perpendiculaire à la direction d'extension du câble (22), d'au moins trois points de contact du câble (M1, M2, M3) avec l'ensemble formé par le collier de serrage (12) et la paroi (20), de manière à serrer le câble (22) sur la paroi (20),
le collier de serrage (12) interagissant avec le câble (22) via une portion (26) ayant, dans ledit plan perpendiculaire à la direction d'extension du câble, une forme de ligne brisée, cette portion en forme de ligne brisée ménageant au moins un des points de contact (M1, M2), notamment deux des points de contact, du câble (22) avec l'ensemble formé par le collier de serrage (12) et la paroi (20).

2. Borne de charge selon la revendication 1, la paroi (20) présentant une surface de contact avec le câble (22) incurvée et le contour du câble (22) étant, dans ledit plan perpendiculaire à sa direction d'extension, un cercle.

3. Borne de charge selon la revendication 1 ou 2, la portion en forme de ligne brisée (26) comprenant au moins trois sommets (S1, S2, S3), à savoir successivement un premier sommet, un deuxième sommet et un troisième sommet, le deuxième sommet (S2) constituant un point de rebroussement pour la portion en forme de ligne brisée (26).

4. Borne de charge selon la revendication 3, le collier de serrage (12) étant positionné sur la paroi (20) de manière à ce que le premier sommet (S1) et le troisième sommet (S3) soient à une distance du câble (22) supérieure à celle existant entre le deuxième sommet (S2) et le câble (22).

5. Borne de charge selon la revendication 3, le collier de serrage (12) étant positionné sur la paroi (20) de manière à ce que le premier sommet (S1) et le troisième sommet (S3) soient à une distance du câble (22) inférieure à celle existant entre le deuxième sommet (S2) et le câble (22).

6. Borne de charge selon l'une quelconque des revendications précédentes, le collier de serrage (12) étant fixé sur la paroi (20) via au moins deux organes de fixation (23), chaque organe de fixation (23) coopérant avec une zone de fixation (24) du collier de serrage et, dans ledit plan perpendiculaire à la direction d'extension du câble, la portion en forme de ligne brisée (26) étant disposée entre les deux zones de fixation (24).

7. Borne de charge selon l'une quelconque des revendications précédentes, le câble électrique (22) étant un câble triphasé ou monophasé.

8. Borne de charge selon l'une quelconque des revendications précédentes, comprenant un boîtier (3a, 3b) à l'intérieur duquel est disposée la paroi (20), cette paroi étant réalisée d'une seule pièce avec le boîtier.

9. Borne de charge selon l'une quelconque des revendications précédentes, le collier de serrage (12) étant réalisé en plastique, notamment en polypropylène chargé de fibres, notamment de fibres de verre.

10. Borne de charge selon l'une quelconque des revendications précédentes, étant configurée pour fournir au véhicule une puissance électrique comprise entre 7 kW et 22 kW.

11. Procédé de serrage d'un câble électrique (22) sur une paroi (20) d'une borne de charge (1) pour véhicule électrique ou hybride, dans lequel :
- on dispose d'un collier de serrage (12) ayant une forme permettant l'existence, dans un plan perpendiculaire à la direction du câble, d'au moins trois points de contact (M1, M2, M3) du câble (22) avec l'ensemble formé par le collier de serrage (12) et la paroi (20), et
- on fixe le collier de serrage (12) sur la paroi (20) après l'avoir positionné de telle sorte que lesdits trois points de contact (M1, M2, M3) avec le câble (22) existent, de manière à serrer le câble (22) sur la paroi (20),
procédé dans lequel :
- le collier de serrage (12) interagit avec le câble (22) via une portion (26) ayant, dans ledit plan perpendiculaire à la direction d'extension du câble, une forme de ligne brisée, cette portion en forme de ligne brisée comprenant au moins trois sommets (S1, S2, S3), à savoir successivement un premier sommet, un deuxième sommet et un troisième sommet, le deuxième sommet constituant un point de rebroussement pour la portion en forme de ligne brisée, et
- on positionne la portion en forme de ligne brisée (26) de sorte que le premier sommet (S1) et le troisième sommet (S3) soient à une distance du câble supérieure à celle existant entre le deuxième sommet (S2) et le câble, ou de sorte que le premier sommet (S1) et le troisième sommet (S3) soient à une distance du câble inférieure à celle existant entre le deuxième sommet (S2) et le câble.
